# EUROPÄISCHE PATENTSCHRIFT

(11) **EP 1 958 865 B1**
(45) Veröffentlichungstag und Bekanntmachung des Hinweises auf die Patenterteilung: **19.10.2011**
(21) Anmeldenummer: 08002615.6
(22) Anmeldetag: 13.02.2008
(51) Int. Cl.: B62M 9/12

(54) **Kettenumwerferbefestigung**
Front derailleur fixture
Fixation de dérailleur avant

(30) Priorität: 16.02.2007 DE 102007008326
(43) Veröffentlichungstag der Anmeldung: 20.08.2008
(73) Patentinhaber: SRAM Deutschland GmbH, 97404 Schweinfurt (DE)
(72) Erfinder: Auer, Marcus, Dipl.-Ing., 97525 Schwebheim (DE)

(56) Entgegenhaltungen:
- GB-A- 666 670
- GB-A- 2 129 484
- JP-A- 2006 132 585

## Beschreibung

Die vorliegende Erfindung betrifft, gemäß dem Oberbegriff des Hauptanspruches, die Kettenumwerferbefestigung eines vorderen Kettenumwerfers am Fahrradrahmen.

Der Kettenumwerfer eines Fahrrades, insbesondere der vordere Kettenumwerfer, wird vorwiegend mit einer Klemmschelle direkt am Rahmenrohr festgeklemmt oder an einem am Rahmen angeordneten Anlötsockel angeschraubt. Die Schellenverbindung besteht in der Regel aus einer mit dem Kettenumwerfer fest verbundenen und einer schwenkbaren schalenförmigen Schellenhälfte. Soll der Kettenumwerfer an einem vorhandenen Anlötsockel angeschraubt werden, so ermöglicht die am Rahmen vordefinierte Stelle nicht immer die korrekte Fixierung des Kettenumwerfers hinsichtlich des Zusammenwirkens von Kettenblattsatz und Kettenumwerfer. Der richtige Abstand vom Rahmen und die richtige auf den entsprechenden Kettenblattsatz (mit 53/42 ... 48/34 Zähnen) abgestimmte Höhenlage des Kettenumwerfers macht zusätzliche Anpassungsmaßnahmen erforderlich.

In der DE 10 2004 037 740 A1 ist ein vorderer Kettenumwerfer mit einem festen und schwenkbaren Schellenarm offenbart. Zum Anpassen an das Rahmenrohr des Fahrrades ist ein einteiliger elastischer Schelleneinsatz aus flexiblem Kunststoff vorgesehen. Diese sehr stabile Kettenumwerferbefestigung, besteht im Wesentlichen aus folgenden Bauteilen, dem festen und schwenkbarem Schellenarm, dem Schelleneinsatz und der Verschlussschraube. Die Kettenumwerferbefestigung hat die Nachteile, dass sie sehr massiv ausgeführt ist und erst mit dem entsprechenden Schelleneinsatz an unterschiedliche Rahmenquerschnitte und Querschnittsformen angepasst werden muss. Zudem sind bisherige Schellenbefestigungen mit und ohne Schelleneinsatz schwer und können bei nicht exakt runden Rohren wie z.B. bei Carbonrahmen durch lokale Druckspitzen Schäden verursachen.

In der DE 10 2005 022 381 A1 wird ein Kettenumwerfer mit einer Adapter zur variablen Befestigung an einem Anlötsockel gezeigt. Dieser Adapter ermöglicht die Anbringung des Kettenumwerfers im richtigen Abstand zum Fahrradrahmen und in mindestens zwei vorbestimmten Höhenpositionen. Dies wird durch einen Grundkörper bewerkstelligt, der über mindestens zwei Befestigungspositionen zur Anbringung der Halteschraube für den Kettenumwerfer verfügt. Dieser Kettenumwerfer mit variabler Befestigung eignet sich zwar zum Anbringen des Kettenumwerfers in mehreren Höhenpositionen am Anlötsockel, setzt jedoch einen bereits am Rahmen vorhandenen Anlötsockel voraus.

Die DE 3515589 C2 zeigt einen vorderen Kettenumwerfer mit einer Bandbefestigung. Das Klemmband ist an den Enden abgewinkelt und jeweils mit einem quer verlaufenden Bogen und einer Eingriffsbohrung ausgestattet. Nachdem dieses recht steife Klemmband um den Rahmen gedrückt wurde, werden die Bandenden in eine Ausnehmung am Kettenumwerfer eingefädelt. Durch Anziehen einer federvorgespannten, scharfkantigen Mutter, die in die Eingriffsbohrungen an den Bandenden eingreift, wird das Klemmband mittels einer Klemmschraube gespannt. Aufgrund der Rillen, die ein Durchgreifen der scharfkantigen Mutter durch die Eingriffsbohrung ermöglichen wird eine formschlüssige Klemmkraftübertragung erzielt. Dies erfordert allerdings stabile Klemmbandenden, zudem wird wegen der erforderlichen Steifheit der Bandenden beim Einfädelvorgang eine Mindestwanddicke des Klemmbandes im Millimeterbereich benötigt. Die steife Ausführung des Klemmbandes wirkt sich sehr nachteilig auf die Montage über das Rahmenrohr und auf das Anschmiegen des Klemmbandes an ein eventuell nicht kreisrundes Rahmenrohr aus und führt zu unerwünschten, örtlich erhöhten Anpressdrücken.

Die JP 2006132585 A offenbart eine als Kettenumwerferbefestigung geeignete Befestigungsschelle gemäß dem Oberbegriff von Anspruch 1.

Ausgehend vom Stand der Technik liegt der Erfindung die Aufgabe zugrunde, einen Kettenumwerfer zu schaffen, der relativ unabhängig vom Rahmenrohr Querschnitt und von einem Anlötsockel in jeder Höhenposition universell eingesetzt werden kann. Zudem wird eine kostengünstige, leichte, anschmiegbare und dennoch stabile Befestigung des vorderen Kettenumwerfers angestrebt.

Die Aufgabe wird mit einer Kettenumwerferbefestigung gemäß den kennzeichnenden Merkmalen des Hauptanspruches erfüllt. Weitere vorteilhafte Ausgestaltungen der Kettenumwerferbefestigung sind den Unteransprüchen und den nachfolgenden Ausführungsbeispielen zu entnehmen. Im Wesentlichen wird die Aufgabe wie folgt gelöst:

Diese erfinderische Kettenumwerferbefestigung besteht aus einem Grundkörper zur Fixierung des Kettenumwerfers mittels einer Befestigungsschraube, einem elastischen Klemmband mit einem Schraubenhalter und einer Schellenschraube. Dabei fixiert die Befestigungsschraube sowohl den Kettenumwerfer als auch das eine Ende des Klemmbandes am Grundkörper. Das Klemmband wird über die Schellenschraube, die in einem Schraubenhalter am anderen Bandende geführt wird, am Grundkörper angeschraubt bzw. gespannt. Die Befestigung des Grundkörpers am entsprechenden Rahmenabschnitt erfolgt kraftschlüssig. Hierzu legt sich der konkave Grundkörperabschnitt an das Rahmenrohr an und wird durch das Klemmband angepresst. Die Aufnahme des Kettenumwerfers erfolgt formschlüssig, hierzu umgreift die Kettenumwerferaufnahme am Grundkörper die entsprechende Anlagekontur am Kettenumwerfer und stützt diesen zusammen mit der Befestigungsschraube verdrehsteif ab. Zur stabilen Abstützung des Kettenumwerfers bzw. der auftretenden Schaltmomente am Fahrradrahmen ragt der Grundkörper mindestens auf einer Seite über das entsprechende Bandende, fluchtend zum Rahmenrohr, hinaus. Das Klemmband umgreift bzw. umschlingt den Schraubenhalter und bildet mit ihm eine formschlüssige Verbindung. Dabei kann das zu einer Öse umgelegte Ende zusätzlich mit einem Befestigungsniet am Klemmband fixiert werden. Die Schellen- und Befestigungsschraube sind am Grundkörper so angeordnet, dass sie im montierten Zustand des Kettenumwerfers am Fahrrad von vorne zugänglich sind. Die Befestigungsschraube und die Schellenschraube sind auf unterschiedlichen Ebenen am Grundkörper angeordnet und ihre Mittellinien verlaufen in einem Winkelbereich zwischen 60° und 120 ° vorzugsweise etwa unter einem rechten Winkel zueinander. Da die beiden Schrauben und damit auch die beiden Klemmbandenden nicht auf einer Ebene liegen sondern versetzt zueinander am Grundkörper angelenkt sind, läuft das Klemmband quasi auf einer Schraubenlinie um den Rahmen bzw. das Rahmenrohr herum. Um eine möglichst leichte Kettenumwerferbefestigung zu erzielen, besteht der Grundkörper und der Schraubenhalter aus einem leichten Werkstoff wie Aluminium, Kunststoff oder einem Faserverbundwerkstoff und das Klemmband aus einem zugfesten, dehnungssteifem Werkstoff wie Metall insbesondere Edelstahl, Titan oder ebenfalls aus einem Faserverbundwerkstoff.

Diese Kettenumwerferbefestigung mit dem stabilen Grundkörper und dem flexiblen Klemmband ist universell an nahezu jedem Rahmen einsetzbar und zeichnet sich durch wenig Bauteile und geringen Montageaufwand aus. Die formschlüssige Aufnahme für den Kettenumwerfer und die formschlüssige Abstützung des Grundkörpers am Fahrradrahmen gewährleistet eine hohe Funktionssicherheit des Kettenumwerfers. Durch den Einsatz von hochwertigen und äußerst festen Materialien wie z. B. Carbon-Faserverbundwerkstoff oder Titan eignet sich die Kettenumwerferbefestigung auch für den Einsatz an Rennrädern.

### Kurzbeschreibung der Zeichnungen

Die vorliegende Erfindung wird mit Bezug auf die beigefügten Zeichnungen detailliert beschrieben, wobei die Zeichnungen lediglich als nicht beschränkende Beispiele der erfinderischen Ganganzeigevorrichtung anzusehen sind.
- Fig. 1: zeigt in einer 3D-Darstellungen eine vormontierte Kettenumwerferbefestigung
- Fig. 2: zeigt in einer Explosionsdarstellung die Kettenumwerferbefestigung
- Fig. 3: zeigt in einer 3D-Darstellungen die Befestigung eines kompletten Kettenumwerfers am Fahrradrahmen

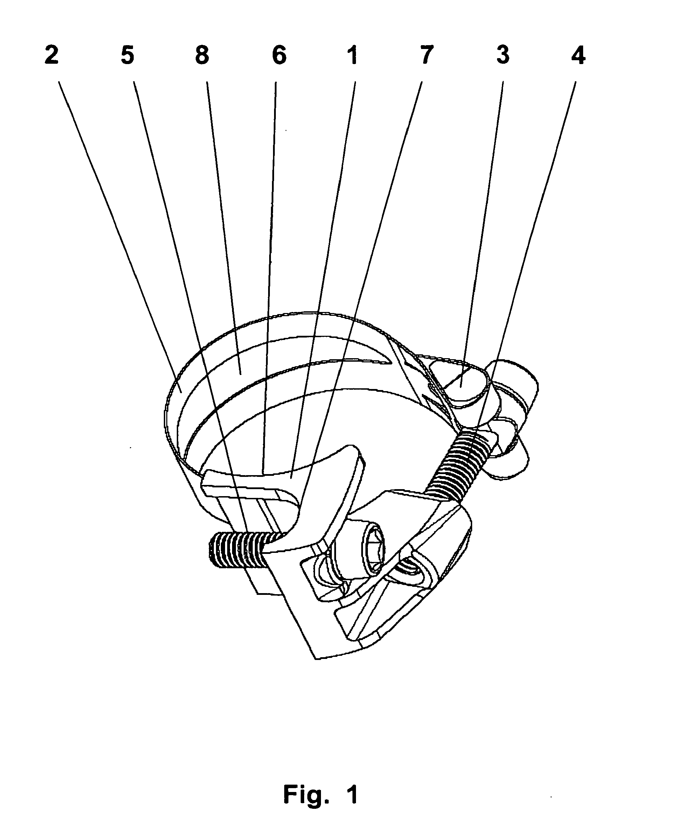

Figur 1 zeigt die vormontierte Kettenumwerferbefestigung mit dem Grundkörper 1, dem Klemmband 2, dem Schraubenhalter 3, der Schellenschraube 4 und der Befestigungsschraube 5. Der Grundkörper 1 ist mit einer konkaven Kontur 6 als Gegenfläche zur entsprechenden Rahmenfläche ausgestattet. Der Kettenumwerfer wird von der Kettenumwerferaufnahme 7 am Grundkörper 1 formschlüssig aufgenommen. Dabei umgreift die Kettenumwerferaufnahme 7 eine entsprechende Anlagekontur am Kettenumwerfer, zudem wird dieser mit der Befestigungsschraube 5 am Grundkörper 1 angeschraubt. Die Höhe der Kettenumwerferaufnahme 7 bzw. des Grundkörpers 1 ist größer als die Breite des Klemmbandes 2 und stützt die vom Kettenumwerfer eingeleiteten Schaltmomente am Rahmen ab. Das Klemmband 2, aus Edelstahl oder Titan, wird mit einem Ende mittels der Befestigungsschraube 5 am Grundkörper 1 zusammen mit dem Kettenumwerfer angeschraubt. Das andere Ende des Klemmbandes 2 ist um den Schraubenhalter 3 gebogen und mit der Schellenschraube 4 am Grundkörper 1 angeschraubt. Hierbei kann das Einschraubgewinde für die Schellenschraube 4 entweder im Schraubenhalter 3 oder im Grundkörper 1 angeordnet sein. Befindet sich das Einschraubgewinde für die Schellenschraube 4 im Schraubenhalter 3, so liegen die beiden Schraubenköpfe der Schellen- und Befestigungsschraube 4,5 am Grundkörper 1 in unmittelbarer Nähe beieinander und können bequem von vorne festgeschraubt werden. Ist die Kettenumwerferbefestigung am Rahmen montiert, so läuft das Klemmband 2 auf einer Schraubenlinie um das Rahmenrohr, da die Befestigungsschraube 5, die das eine Ende des Klemmbandes 2 am Grundkörper 1 fixiert, nicht auf der gleichen Ebene liegt, wie die Schellenschraube 4, mit der das andere Ende am Grundkörper 1 befestigt wird. Das Klemmband 2 ist zur Gewichtsreduzierung mit einem Ausschnitt 8 versehen. Es ist so elastisch, dass es sich beim Festspannen durch die Schellenschraube 4 fest an die konvexe Kontur des Rahmenrohres anschmiegt.

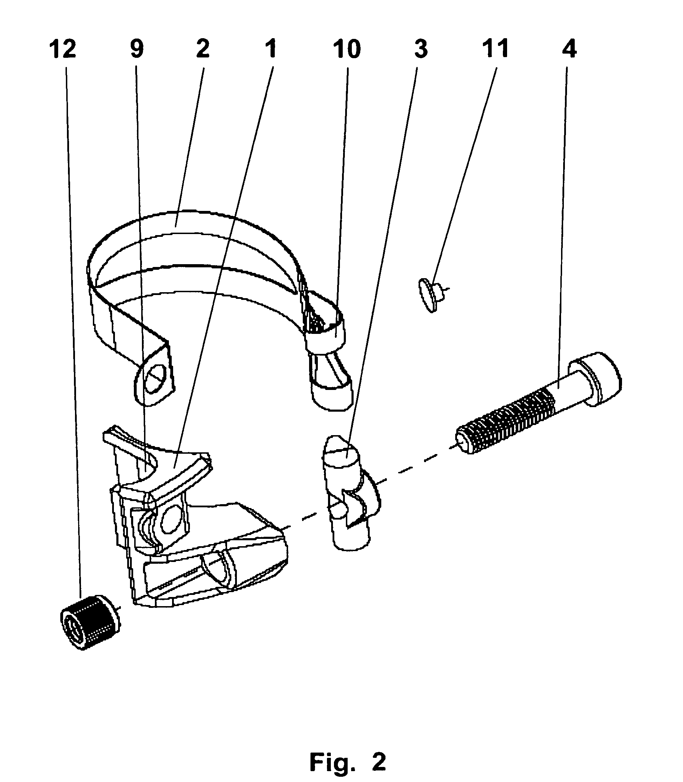

Figur 2 zeigt die Einzelteile der Kettenumwerferbefestigung. Dabei ist der Grundkörper 1 das Kernstück, an dem das Klemmband 2 mit der Befestigungsschraube und der Schellenschraube 4 angeschraubt werden. Das Klemmband 2 ist an einem Ende abgewinkelt und mit einer oder mehreren von einander beabstandeten Bohrungen für die Durchführung der Befestigungsschraube versehen. Mehrere Bohrungen am Klemmbandende ermöglichen eine erste Anpassung des Klemmbandes an verschiedene Rahmenrohrquerschnitte. Dieses Ende wird durch eine Aussparung 9 am Grundkörper 1 eingefädelt und mit der Befestigungsschraube, die in eine der Bohrungen eintaucht, zusammen mit dem Grundkörper 1 am Kettenumwerfer angeschraubt. Ein Abschnitt des Grundkörpers 1 zwischen der Aussparung 9 und einer Außenkante am Grundkörper 1 befindet sich nach der Montage zwischen Klemmband 2 und Rahmenrohr. Das andere Ende ist um den Schraubenhalter 3 gebogen und bildet eine Öse 10 die mit einem Befestigungsniet 11 am Klemmband 2 fixiert wird. Das Klemmband 2 wird somit an beiden Enden formschlüssig festgehalten. Der Schraubenhalter 3 wird von der Öse 10 aufgenommen ist mit einer Bohrung zur Aufnahme der Schellenschraube 4 ausgestattet. Bei der Montage des Kettenumwerfers am Rahmenrohr wird das Klemmband 2 durch Einschrauben der Schellenschraube 4 festgezogen. Besteht den Grundkörper aus einem leichten Werkstoff z. B. Aluminium oder Kunststoff, so wird zur besseren Kraftabstützung bzw. Krafteinleitung ein Gewindeeinsatz 12 am Grundkörper 1 angebracht.

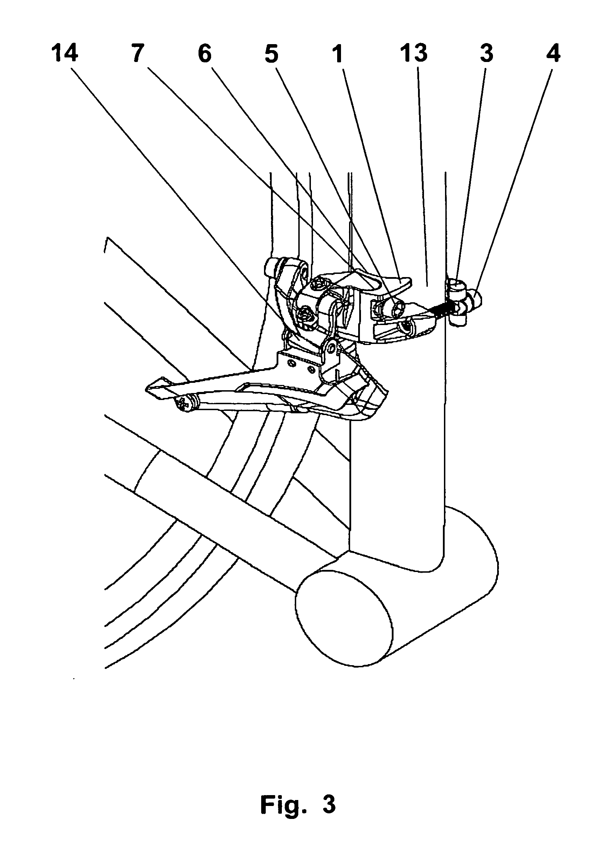

Figur 3 zeigt einen kompletten Kettenumwerfer 14 am Rahmenrohr 13. Der Kettenumwerfer 14 liegt formschlüssig an der Kettenumwerferaufnahme 7 des Grundkörpers 1 an und wird von der Befestigungsschraube 5 fixiert. Das Klemmband wird über die Schellenschraube 4, die im Schraubenhalter 3 geführt wird, am Grundkörper1 angeschraubt. Die Befestigungsschraube 5 und die Schellenschraube 4 befinden sich auf zwei unterschiedlichen Ebenen am Grundkörper 1 und ihre Mittellinien stehen etwa im rechten Winkel zueinander. Die Anlagefläche des Grundkörpers 1 am Rahmenrohr 13 hat eine konkave Kontur 6. Die Höhe der Anlagefläche des Grundkörpers 1 am Rahmenrohr 13 ist größer als die Klemmbandbreite bzw. die Länge des Schraubenhalters 3.

### Bezugszeichenliste

- 1: Grundkörper
- 2: Klemmband
- 3: Schraubenhalter
- 4: Schellenschraube
- 5: Befestigungsschraube
- 6: Konkave Kontur
- 7: Kettenumwerferaufnahme
- 8: Ausschnitt
- 9: Aussparung
- 10: Öse
- 11: Befestigungsniet
- 12: Gewindeeinsatz
- 13: Rahmenrohr
- 14: Kettenumwerfer

## Patentansprüche

1. Kettenumwerferbefestigung zum Anbringen eines Kettenumwerfers (**14**) am Fahrradrahmen mit einem Klemmband (**2**), das an beiden Enden formschlüssig aufgenommen und mittels einer Schellenschraube (**4**) gespannt wird,
wobei die Kettenumwerferbefestigung aus einem Grundkörper (**1**), der mittels mindestens eines lösbaren Verbindungselementes z. B. einer Befestigungsschraube (**5**) am Kettenumwerfer (**14**) montiert wird und aus einem elastischen Klemmband (**2**) besteht, das mit einem Ende formschlüssig mit dem Grundkörper (**1**) verbunden ist und mit dem anderen Ende entweder direkt die Schellenschraube (**4**) oder diese über einen Schraubenhalter (**3**) formschlüssig aufnimmt, wobei die Schellenschraube (**4**) den Grundkörper (**1**) und das Klemmband (**2**) verbindet bzw. das Klemmband (**2**) um das Rahmenrohr (**13**) spannt
**dadurch gekennzeichnet,**
**dass** das eine Ende des Klemmbandes (**2**) abgewinkelt ist und mit mindestens einer Bohrung für die Befestigungsschraube (**5**) ausgestattet ist, die dieses Ende am Grundkörper (**1**) zusammen mit dem Kettenumwerfer (**14**) fixiert, dass das eine Ende des Klemmbandes (**2**) durch eine Aussparung (**9**) am Grundkörper (**1**) eingefädelt wird und das Klemmband (**2**) in einer Schraubenlinie das Rahmenrohr (**13**) umschlingt,
wobei ein Kettenwerfer 14 formschlüssig an einer Kettenumwerferaufnahme 7 des Grundkörpers im montierten Zustand 1 anliegt und durch die Befestigungsschraube 5 fixierbar wird.

2. Kettenumwerferbefestigung nach Anspruch 1,
**dadurch gekennzeichnet,**
**dass** das andere Ende des Klemmbandes (**2**) eine Öse (**10**) zur formschlüssigen Aufnahme des Schraubenhalters (**3**) bildet und zur Durchführung der Schellenschraube (**4**) mit einem Durchbruch ausgestattet ist.

3. Kettenumwerferbefestigung nach Anspruch 1,
**dadurch gekennzeichnet,**
**dass** der Grundkörper (**1**) die Befestigungsschraube (**5**) und die Schellenschraube (**4**) formschlüssig z. B. in einer Bohrung oder Gewindebohrung aufnimmt, die in verschiedenen Ebenen angeordnet sind.

4. Kettenumwerferbefestigung nach Anspruch 2,
**dadurch gekennzeichnet,**
**dass** die Mittellinien der Befestigungsschraube (**5**) und der Schellenschraube (**4**) auf einer oder auf verschiedenen Ebenen liegen und in einem Winkelbereich von 60° bis 120° vorzugsweise etwa in einem rechten Winkel zueinander verlaufen.

5. Kettenumwerferbefestigung nach Anspruch 2,
**dadurch gekennzeichnet,**
**dass** die Schellenschraube (**4**) entweder in eine Gewindebohrung am Schraubenhalter (**3**) oder in eine Gewindebohrung bzw. Gewindeeinsatz (**12**) am Grundkörper (**1**) zum Spannen des Klemmbandes (**2**) eingeschraubt wird.

6. Kettenumwerferbefestigung nach Anspruch 1,
**dadurch gekennzeichnet,**
**dass** der Grundkörper (**1**) mit einer konkaven Kontur (**6**) am Rahmenrohr (**13**) anliegt und mit der Kettenumwerferaufnahme (**7**) den Kettenumwerfer (**14**) an einer entsprechenden Kontur formschlüssig umgibt und dieser mit der Befestigungsschraube (**5**) am Grundkörper (**1**) fixiert wird.

7. Kettenumwerferbefestigung nach Anspruch 6,
**dadurch gekennzeichnet,**
**dass** die Höhe des Grundkörpers (**1**) bzw. der konkaven Anlagefläche zur bessern Abstützung der auftretenden Schaltmomente wesentlich größer ist, als die Breite des Klemmbandes (**2**).

8. Kettenumwerferbefestigung nach Anspruch 1,
**dadurch gekennzeichnet,**
**dass** der Grundkörper (**1**) aus einem leichten Werkstoff, wie Aluminium, Kunststoff oder Faserverbundwerkstoff besteht und das Klemmband (**2**) aus einem zugfesten Material wie Edelstahl, Titan oder aus einem Faserverbundwerkstoff hergestellt wird.

## Claims

1. Front derailleur fixture for fitting a front derailleur (14) on a bicycle frame by way of a clamping band (2) which is held in a form-fitting manner at both ends and is clamped by means of a clip screw (4), wherein the front derailleur fixture consists of a basic body (1), which is mounted on the front derailleur (14) by means of at least one detachable connecting element, for example a fastening screw (5), and of an elastic clamping band (2), one end of which is connected to the basic body (1) in a form-fitting manner and the other end of which either holds the clip screw (4) directly or holds the latter in a form-fitting manner via a screw holder (3), wherein the clip screw (4) connects the basic body (1) and the clamping band (2) and clamps the clamping band (2) around the frame tube (13),
**characterized**
**in that** one end of the clamping band (2) is angled and is provided with at least one bore for the fastening screw (5), which fixes this end to the basic body (1) together with the front derailleur (14),
**in that** one end of the clamping band (2) is threaded through a cutout (9) in the basic body (1) and the clamping band (2) helically wraps around the frame tube (13),
wherein a front derailleur (14) bears in a form-fitting manner against a front derailleur holder (7) of the basic body (1) in the mounted state and can be fixed by the fastening screw (5).

2. Front derailleur fixture according to Claim 1,
**characterized**
**in that** the other end of the clamping band (2) forms an eyelet (10) for holding the screw holder (3) in a form-fitting manner and is provided with an opening for passing through the clip screw (4).

3. Front derailleur fixture according to Claim 1,
**characterized**
**in that** the basic body (1) holds the fastening screw (5) and the clip screw (4) in a form-fitting manner, for example in a bore or threaded bore, which are arranged in different planes.

4. Front derailleur fixture according to Claim 2,
**characterized**
**in that** the centre lines of the fastening screw (5) and of the clip screw (4) lie on one plane or on different planes and extend in an angular range of from 60° to 120°, preferably approximately at a right angle, with respect to one another.

5. Front derailleur fixture according to Claim 2,
**characterized**
**in that** the clip screw (4) is screwed either into a threaded bore in the screw holder (3) or into a threaded bore in or threaded insert (12) on the basic body (1) in order to clamp the clamping band (2).

6. Front derailleur fixture according to Claim 1,
**characterized**
**in that** the basic body (1) bears against the frame tube (13) by way of a concave contour (6) and surrounds the front derailleur (14) in a form-fitting manner at a corresponding contour by way of the front derailleur holder (7) and said front derailleur (14) is fixed to the basic body (1) by way of the fastening screw (5).

7. Front derailleur fixture according to Claim 6,
**characterized**
**in that** the height of the basic body (1) or of the concave bearing surface, in order to better support the shifting torques which occur, is substantially greater than the width of the clamping band (2).

8. Front derailleur fixture according to Claim 1,
**characterized**
**in that** the basic body (1) consists of a lightweight material such as aluminium, plastics material or fibre composite material and the clamping band (2) is produced from a tension-resistant material such as stainless steel, titanium or from a fibre composite material.

## Revendications

1. Fixation de dérailleur pour le montage d'un dérailleur (14) sur le cadre d'une bicyclette avec un ruban de serrage (2) qui est reçu par engagement par correspondance géométrique aux deux extrémités et qui est serré avec une vis de collier de serrage (4),
la fixation de dérailleur se composant d'un corps de base (1) qui est monté au moyen d'au moins un élément de connexion desserrable par exemple d'une vis de fixation (5) sur le dérailleur (14) et d'un ruban de serrage (2) élastique qui est connecté à une extrémité par engagement par correspondance géométrique au corps de base (1) et qui reçoit par engagement par correspondance géométrique à l'autre extrémité soit directement la vis de collier de serrage (4) soit par le biais d'un dispositif de fixation de vis (3), la vis de collier de serrage (4) reliant le corps de base (1) et le ruban de serrage (2) ou serrant le ruban de serrage (2) autour du tube du cadre (13),
**caractérisée en ce que**
l'une des extrémités du ruban de serrage (2) est coudée et est munie d'au moins un trou pour la vis de fixation (5), qui fixe cette extrémité sur le corps de base (1) conjointement avec le dérailleur (14),
en ce l'une des extrémités du ruban de serrage (2) est enfilée à travers un évidement (9) sur le corps de base (1) et le ruban de serrage (2) enveloppe le tube de cadre (13) suivant une courbe hélicoïdale,
un dérailleur (14) s'appliquant, dans l'état monté, par engagement par correspondance géométrique contre un logement de dérailleur (7) du corps de base (1), et pouvant être fixé par la vis de fixation (5).

2. Fixation de dérailleur selon la revendication 1,
**caractérisée en ce que**
l'autre extrémité du ruban de serrage (2) forme un oeillet (10) pour recevoir par engagement par correspondance géométrique le support de vis (3) et est munie d'un perçage pour le passage de la vis de collier de serrage (4).

3. Fixation de dérailleur selon la revendication 1,
**caractérisée en ce que**
le corps de base (1) reçoit par engagement par correspondance géométrique la vis de fixation (5) et la vis de collier de serrage (4) par exemple dans un trou ou un trou fileté, lesquels trous sont disposés dans des plans différents.

4. Fixation de dérailleur selon la revendication 2,
**caractérisée en ce que**
les axes médians de la vis de fixation (5) et de la vis de collier de serrage (4) se situent sur un même plan ou sur des plans différents, et s'étendent l'un par rapport à l'autre dans une plage angulaire de 60° à 120°, de préférence suivant approximativement un angle droit.

5. Fixation de dérailleur selon la revendication 2,
**caractérisée en ce que**
la vis de collier de serrage (4) est vissée soit dans un trou fileté sur le support de vis (3) soit dans un trou fileté ou un insert fileté (12) sur le corps de base (1) pour serrer le ruban de serrage (2).

6. Fixation de dérailleur selon la revendication 1,
**caractérisée en ce que**
le corps de base (1) s'applique avec un contour concave (6) sur le tube de cadre (13) et entoure par engagement par correspondance géométrique avec le logement de dérailleur (7) le dérailleur (14) au niveau d'un contour correspondant et celui-ci est fixé au corps de base (1) avec la vis de fixation (5).

7. Fixation de dérailleur selon la revendication 6,
**caractérisée en ce que**
la hauteur du corps de base (1) ou de la face d'appui concave, pour un meilleur support des couples de changement de vitesse se produisant, est considérablement plus grande que la largeur du ruban de serrage (2).

8. Fixation de dérailleur selon la revendication 1,
**caractérisée en ce que**
le corps de base (1) se compose d'un matériau léger, comme de l'aluminium, du plastique ou un matériau composite renforcé par des fibres, et le ruban de serrage (2) se compose d'un matériau résistant à la traction, comme de l'acier surfin, du titane ou un matériau composite renforcé par des fibres.
